**Europäisches Patentamt**

**European Patent Office**

**Office européen des brevets**

(19)

(11) Veröffentlichungsnummer : **0 203 206**
**B1**

(12) **EUROPÄISCHE PATENTSCHRIFT**

(45) Veröffentlichungstag der Patentschrift :
02.03.88

(21) Anmeldenummer : **85105344.7**

(22) Anmeldetag : **02.05.85**

(51) Int. Cl.⁴ : **B 01 D 29/48**, B 01 D 37/02

(54) Rückspülbare Filterkerze für Anschwemm-Kerzenfilter mit hängend eingebauten Filterkerzen und Verwendung eines Spaltrohres hierfür.

(43) Veröffentlichungstag der Anmeldung :
03.12.86 Patentblatt 86/49

(45) Bekanntmachung des Hinweises auf die Patenterteilung : 02.03.88 Patentblatt 88/09

(84) Benannte Vertragsstaaten :
AT BE CH DE FR GB IT LI LU

(56) Entgegenhaltungen :
DE-C- 1 964 313
FR-A- 2 526 478
GB-A- 1 601 731
US-A- 2 046 458
US-A- 3 253 714
US-A- 4 288 330
US-A- 4 378 840

(73) Patentinhaber : **Filtrox Maschinenbau A.-G.**
**Moosmühlenstrasse 6**
**CH-9030 St. Gallen (CH)**

(72) Erfinder : **Scheiwiler, Rolf**
**Bankgasse 3**
**CH-9402 Maischwil (CH)**

(74) Vertreter : **Steudtner, Werner, Dipl.-Ing.**
**Lindenhof 5**
**CH-8604 Hegnau bei Zürich (CH)**

EP 0 203 206 B1

Jouve, 18, rue St-Denis, 75001 Paris, France

## Beschreibung

Die Erfindung bezieht sich auf eine rückspülbare Filterkerze für Anschwemm-Kerzenfilter mit hängend eingebauten Filterkerzen, bei dem ein Filterkessel durch eine horizontale Trennwand in einen oberen Filtratraum und einen unteren Unfiltratraum unterteilt ist und die Filterkerzen an der Trennwand aufgehängt und befestigt sind und in den unter der Trennwand befindlichen Unfiltratraum hineinragen, mit einem oberen Anschlussstück zur Aufhängung und Befestigung der Filterkerze an der Trennwand, das mit einem durch dasselbe hindurchlaufenden Abflusskanal zur Abführung von Filtrat aus dem Filterkerzeninnenraum in den Filtratraum versehen ist, einer im Bereich ihres oberen Endes mit dem Anschlussstück verbundenen, im wesentlichen rohrartigen und zumindest an ihrer Aussenseite im wesentlichen zylinderförmigen, selbsttragenden Kerzenwand, deren Aussenseite als Tragorgan für eine mindestens zum Teil von Filterhilfsmittel gebildete, die Filtrierung übernehmende Anschwemmschicht vorgesehen ist, und einem im Bereich des unteren Endes der Kerzenwand an derselben angebrachten Verschlusstück zur Abtrennung des Filterkerzeninnenraumes vom Unfiltratraum.

Filterkerzen dieser Art sind seit längerer Zeit bekannt, z. B. aus der DE-C-19 64 313 und aus den Angaben in dieser DE-C zum damaligen Stand der Technik, aus der US-A-4,288,330 und der EP-A-0 032 228. Von diesen bekannten Filterkerzen der eingangs genannten Art hat sich in der Praxis über längere Dauer nur eine schon in der genannten DE-C zum Stand der Technik benannte Filterkerze (DE-C-19 64 313, Sp.1, Z.58, bis Sp.2, Z.20) durchsetzen können, — und das, obwohl die Herstellung dieser Filterkerze einen relativ hohen technischen Aufwand erfordert und diese Filterkerze ausserdem auch stossempfindlich, ist, — während alle übrigen bekannten Filterkerzen der eingangs genannten Art spezifische neue Probleme entweder bei der Herstellung oder bei ihrem praktischen Einsatz mit sich brachten, die — wenn überhaupt — nur mit einem unverhältnismässig grossen techni-Aufwand hätten überwunden werden können.

Bei der bekannten Filterkerze der eingangs genannten Art, die sich in der Praxis durchsetzen konnte, besteht die Kerzenwand aus einem zu einem Rohr gebogenen und mit einer Längsnaht verschweissten Lochblech mit verhältnismässig grossen Löchern als tragendem Teil der Kerzenwand und einer Lage eines auf das rohrförmig gebogene Lochblech mit relativ geringem Abstand von Windung zu Windung aufgewickelten verhältnismässig dünnen Drahtes, der mit dem Lochblech durch Lötung oder Schweissung verbunden ist. Diese Drahtlage bildet das eigentliche Tragorgan für die Anschwemmschicht, bei dem die durchlässigen Stellen von den Spalten zwischen den einzelnen Windungen der Drahtlage gebildet werden. Der technische Aufwand für die Herstellung einer solchen Filterkerze ist hauptsächlich deswegen verhältnismässig hoch, weil die Verlötung oder Verschweissung des auf das rohrförmig zusammengebogene Lochblech aufgewickelten Drahtes eine ziemlich aufwendige und komplizierte Verfahrenstechnik erfordert, damit einerseits der Draht fest mit dem Lochblech verbunden wird und andererseits in die Spalten zwischen den einzelnen Drahtwindungen kein die Spalten zusetzendes Löt- oder Schweissmaterial gelangen kann. Die dabei entstehenden Schwierigkeiten beruhen im Prinzip darauf, dass der tragende Teil der Kerzenwand aus einem Lochblech besteht, weil bei einem solchen Lochblech der Gesamtquerschnitt der Löcher höchstens ca. 40 % der Gesamtfläche des Lochbleches betragen darf, wenn es seine Funktion als tragender Teil der Kerzenwand erfüllen soll, und von diesen auf die Löcher entfallenden 40 % der Gesamtfläche des Lochbleches ein nur etwa dem Verhältnis der Spaltbreite s des Spaltes zwischen den einzelnen Drahtwindungen der besagten Drahtlage zu dem Drahtdurchmesser d des diese Drahtlage bildenden Drahtes oder genauer dem Verhältnis $1 : (1 + d/s)$ entsprechender Anteil auf den durch Spalte in der Drahtlage und darunterliegende Löcher in dem Lochblech definierten freien Durchflussquerschnitt der Kerzenwand entfällt, denn wenn wenigstens ein freier Durchflussquerschnitt der Kerzenwand von ca. 10 % der Gesamtfläche der Kerzenwand erreicht werden soll, darf somit bei einem Lochblech als tragendem Teil der Kerzenwand der Durchmesser des die auf das Lochblech aufgewickelte Drahtlage bildenden Drahtes nur dreimal so gross wie die Spaltbreite der Spalte zwischen den einzelnen Drahtwindungen der Drahtlage und damit bei der bei dieser Kerzenkonstruktion zur Bildung stabiler Anschwemmschichten erforderlichen Spaltbreite von ca. 80 μm nur ca. 0,25 mm sein, und bei einer Drahtstärke von nur 0,25 mm ist es natürlich klar, dass zunächst einmal bei einer vorgegebenen Kerzenlänge die Anzahl der Windungen der Drahtlage relativ gross sein muss und die kontinuierlich mit den Aufwickeln des Drahtes auf das Lochblech erfolgende Verlötung oder Verschweissung des Drahtes mit dem Lochblech daher schon allein wegen der hohen Windungszahl der Drahtlage eine sehr aufwendige Verfahrenstechnik erfordert, und ausserdem ist natürlich das Verlöten oder Verschweissen eines Drahtes mit einem Blech ohne irgendwelche die besagte Gefahr eines Zusetzens der Spalte mit sich bringenden Rückstände von Löt- oder Schweissmaterial umso komplizierter, je dünner der Draht oder genauer je geringer das Verhältnis der Drahtstärke zur Blechstärke ist, zumal bei dieser Kerzenkonstruktion ja noch erschwerend hinzukommt, dass es sich um linienförmige Verlötungen oder Verschweissungen des jeweils über eine längere Strecke auf dem Lochblech aufliegenden Drahtes und nicht um das demgegenüber wesentlich einfachere punktförmige Verlöten oder Verschweissen z. B. von sich kreuzenden Drähten handelt. Die sehr aufwendige und ausserordentlich komplizierte Verfahrenstechnik bei der Herstellung der einzigen Filterkerze der eingangs genannten Art, die sich in der Praxis durchsetzen konnte, ist also ursächlich auf die Kerzenkonstruktion mit einem Lochblech als tragendem Teil der Kerzenwand und der sich daraus zwingend ergebenden sehr geringen Drahtstärke des auf das rohrförmige Lochblech in Form einer Drahtlage aufzuwickelnden Drahtes zurückzuführen, und natürlich führte diese Verfahrenstechnik auch zu entsprechend hohen Herstellungskosten für diese Filterkerzen. Hinzu kommt noch, dass diese Filterkerzen in erster Linie wegen der geringen Drahtstärke des die Drahtlage bildenden Drahtes und dem daraus resultierenden Fehlen einer genügenden Eigensteifigkeit des Drahtes sehr stossempfindlich sind, denn da der Draht im Bereich der relativ grossen Löcher des Lochbleches nicht fixiert ist, kann sich der Draht im Bereich der Löcher infolge seiner mangelnden Eigensteifigkeit schon bei einem geringfügigen, z. B. beim Transport oder Einbau der Filterkerzen erfolgenden Stoss verbiegen und dadurch relativ zu den benachbarten Drahtwindungen verschieben, wodurch an der Stossstelle ein breiterer Spalt entsteht, an dem sich keine stabile Anschwemmschicht mehr bilden kann und der daher die Unbrauchbarkeit der ganzen Filterkerze zur Folge hat.

Nun hat es natürlich nicht an Versuchen gefehlt, eine andere Grundkonzeption für die Konstruktion von Filterkerzen der eingangs genannten Art zu finden, die nicht wie die zuvor erörterte Kerzenkonstruktion schon von ihrem Konstruktionsprinzip her unausweichlich zu hohen Herstellungskosten der Filterkerzen und zudem noch zu einer beträchtlichen Stossempfindlichkeit derselben führt.

Schon vor der Einführung von Filterkerzen der zuvor erörterten Kerzenkonstruktion hatte man daher zur Vermeidung der mit einer solchen Einführung verbundenen hohen Gesamtherstellungskosten für Anschwemm-Kerzenfilter mit z. B. 100 hängend eingebauten Filterkerzen nach einer Kerzenkonstruktion gesucht, die einen geringeren Herstellungsaufwand als die zuvor erörterte Kerzenkonstruktion erfordert und trotzdem aber die bei einem Anschwemm-Kerzenfilter mit hängend eingebauten Filterkerzen auftretenden betrieblichen Anforderungen erfüllt. In nähere Erwägung konnte dabei jedoch nur eine bekannte Kerzenkonstruktion (DE-C-19 64 313, Sp.2, Z.21-68) gezogen werden, bei der die Kerzenwand aus einer Schraubenfeder mit einem verhältnismässig dicken, z. B. 2 mm starken, Federdraht besteht, deren Federwindungen im ungespannten Zustand der Feder aneinanderliegen und die in etwas gespanntem Zustand in die Filterkerze eingebaut wird, so dass zwischen den einzelnen Federwindungen enge Spalte vorhanden sind, die die durchlässigen Stellen der Kerzenwand bilden. Bei dieser Kerzenkonstruktion ist zwar ein tragendes Lochblech oder eine andere Tragkonstruktion zur Stützung der Kerzenwand nicht erforderlich, so dass hier die Hauptursache für den hohen Herstellungsaufwand bei der zuvor erörterten Kerzenkonstruktion wegfällt und eine solche Schraubenfederkerze mithin nur einen relativ geringen Herstellungsaufwand erfordert, aber diese Schraubenfederkerze erfüllt die Anforderungen, die für eine gute Rückspülbarkeit des Anschwemm-Kerzenfilters gestellt werden müssen, nur ungenügend, weil die Aussenseite der Kerzenwand, die von der Aussenseite der Schraubenfeder gebildet wird, wegen der grossen Federdrahtdicke verhältnismässig stark gewellt ist und durch diese wellige Oberfläche die Ablösung des Filterkuchens bei der Rückspülung und das Abrutschen desselben in Kerzenlängsrichtung nach unten beträchtlich erschwert werden, und da es sich hierbei im Gegensatz zu der eine nichterfüllte ausserbetriebliche Anforderung darstellenden Stossempfindlichkeit der zuvor erörterten Kerzenkonstruktion um die Nichterfüllung einer betrieblichen Anforderung handelt, konnte die seinerzeitige Entscheidung trotz der unbestreitbaren Vorteile der Schraubenfederkerze hinsichtlich Stossunempfindlichkeit und relativ geringer Herstellungskosten nur zugunsten der zuvor erörterten Kerzenkonstruktion ausfallen. Zwar war für diese Entscheidung nicht allein die grosse Oberflächenwelligkeit der Aussenseite der Kerzenwand von Schraubenfederkerzen sondern auch die Tatsache massgebend, dass bei ungleichmässiger Druckverteilung längs des Umfanges der Schraubenfeder Einbuchtungen der Schraubenfeder auf der Seite des höheren Druckes und entsprechende Ausbuchtungen auf der Seite des niedrigeren Druckes auftreten, die zu einer Verringerung der Spaltbreite zwischen den einzelnen Federwindungen auf der Einbuchtungsseite, also der Seite des höheren Druckes, und damit zu einem weiteren Druckanstieg auf dieser Seite und gleichzeitig zu einer Vergrösserung der Spaltbreite zwischen den einzelnen Federwindungen und damit zu einer Verschlechterung der Filterwirkung auf der Ausbuchtungsseite, also der Seite des geringeren Druckes, führen und solche ungleichmässigen Druckverteilungen bei Anschwemm-Kerzenfiltern z. B. bei einer ungleichmässigen Verteilung der Anschwemmschicht längs des Umfanges der Kerzenwand auftreten, wie sie sich beispielsweise bei Anschwemm-Kerzenfiltern mit einer sehr grossen Anzahl von Filterkerzen bei den im Kerzenfilter aussen angeordneten Filterkerzen ergeben kann, aber ausschlaggebend für die seinerzeitige Entscheidung zugunsten der besagten, zuvor erörterten Kerzenkonstruktion war wohl doch die grosse Oberflächenwelligkeit der Kerzenaussenwand von Schraubenfederkerzen.

Da mit der besagten, zuvor erörterten Kerzenkonstruktion mit einem schraubenlinienförmig gewundenen, durch eine Tragkonstruktion in Form eines Lochbleches abgestützten dünnen Draht als Träger der Anschwemmschicht und den Schraubenfederkerzen mit einem schraubenlinienförmig gewundenen, selbsttragenden dicken Federdraht als Träger der Anschwemmschicht die Möglichkeiten zur Ausbildung der Kerzenwand bzw. des die Anschwemmschicht tragenden Teiles derselben als schraubenlinienförmig gewundener Draht erschöpft zu sein schienen, weil einerseits im Falle der Verwendung einer Tragkonstruktion aus den oben schon erörterten Gründen nur ein sehr dünner und damit zwangsläufig zu hohen Herstellungskosten und zur Stossempfindlichkeit der Filterkerzen führender Draht verwendet werden konnte und andererseits bei Weglassung einer Tragkonstruktion zur Erzielung der erforderlichen Tragfähigkeit nur ein relativ dicker und daher zu einer grossen Oberflächenwelligkeit der Kerzenaussenwand führender Draht in Frage kam, ist man bei den obenerwähnten Versuchen, eine andere Grundkonzeption für die Konstruktion von Filterkerzen der eingangs genannten Art zu finden, um die Schwierigkeiten mit Kerzenkonstruktionen mit einem schraubenlinienförmig gewundenen Draht als Träger der Anschwemmschicht überwinden zu können, davon ausgegangen, dass nur Kerzenkonstruktionen mit einer rohrförmigen selbsttragenden, mit Durchtritten für die Flüssigkeit versehenen Kerzenwand Aussichten für eine erfolgreiche Ueberwindung der besagten Schwierigkeiten bieten würden.

Einer der frühesten dieser Versuche führte daher zu einer Filterkerze der eingangs genannten Art, bei der die Kerzenwand aus einer selbsttragenden, zylindrisch gebogenen, als Träger für die Anschwemmschicht ausgebildeten Lochplatte mit einer Plattendicke unter 2 mm und mit gleichmässig über die Plattenfläche verteilten Oeffnungen besteht, die von der Aussenseite der Kerzenwand nach deren Innenseite erweitert sind und deren Oeffnungsquerschnitte an der Aussenseite der Lochplatte insgesamt weniger als 10 % der Gesamtfläche der Aussenseite einnehmen und deren Oeffnungsweite oder Spaltbreite an der Aussenseite der Lochplatte kleiner als 250 µm ist und bei der vorzugsweise die Oeffnungsquerschnitte an der Innenseite der Lochplatte insgesamt zwischen 20 und 60 Prozent der Gesamtfläche der Innenseite der Lochplatte einnehmen und die Lochplatte vorzugsweise aus Stahlblech von einer Dicke unter 1 mm besteht und auf ihrer die Kerzenaussenwand bildenden Seite geschliffen ist (DE-C-19 64 313, Anspr. 1-4). Diese Filterkerze hat sich in langjährigen Versuchsreihen, die auch Filtrationsexperimente unter den extremsten Bedingungen einschlossen, in filtrationstechnischer Hinsicht sehr gut bewährt und schien daher das obenerwähnte Urteil der auf dem Spezialgebiet der Filterkerzen für Anschwemm-Kerzenfilter tätigen Fachleute, dass nur Kerzenkonstruktionen mit einer rohrförmigen selbstragenden, mit Durchtritten für die Flüssigkeit versehenen Kerzenwand Aussichten für eine erfolgreiche Ueberwindung der bei den Filterkerzen mit einem schraubenlinienförmigen Draht als Träger für die Anschwemmschicht aufgetretenen Schwierigkeiten bieten würden, zu bestätigen. Dass diese Filterkerze sich dennoch in der Praxis gegenüber der eingangs erörterten Filterkerze mit einem auf ein Lochblech schraubenlinienförmig gewundenen dünnen Draht nicht durchsetzen konnte, hatte allein technologische Gründe, denn es konnte trotz intensiver Bemühungen in den verschiedensten Richtungen kein Produktionsverfahren gefunden werden, mit dem sich diese Filterkerzen in grösseren Mengen mit einem wirtschaftlich vertretbaren Aufwand hätten herstellen lassen, und die handwerkliche Herstellung dieser Filterkerzen, die man bei der Schaffung der für die genannten Versuchsreihen verwendeten Musterexemplare angewandt hatte, kam für eine Serienproduktion dieser Filterkerzen schon wegen der hohen Lohnkosten, die eine solche Produktionsweise verursacht hätte, nicht in Betracht. Die Hauptschwierigkeit, weswegen kein geeignetes Produktionsverfahren für diese Filterkerzen gefunden werden konnte, bestand darin, dass die Oeffnungen in der Kerzenwand für den Durchtritt der Flüssigkeit wegen der erforderlichen Genauigkeit der Dimensionen dieser Oeffnungen rationell nur hätten gestochen werden können und dies wegen der grossen Anzahl von Oeffnungen nur mit einer Stechwalze hätte durchgeführt werden können und das bei der aus filtertechnischen Festigkeitsgründen erforderlichen Mindestwandstärke der selbsttragenden Kerzenwand nicht mehr möglich war. Versuche, mit geringeren Kerzenwandstärken auszukommen und durch Anwendung eines speziellen Stechverfahrens trotzdem eine rationelle Fertigung der Filterkerzen mit Hilfe von Stechwalzen zu ermöglichen, blieben letzlich erfolglos, zumal bei den geringeren Kerzenwandstärken auch noch zusätzliche Probleme mit dem Stumpfverschweissen des die Kerzenwand bildenden, zu einem Rohr gebogenen Lochbleches auftraten.

Auch Versuche, die herkömmlichen Produktionsmethoden zur Serienproduktion solcher Lochbleche mit feinen, sich erweiternden Oeffnungen durch moderne Produktionsverfahren zur Bearbeitung metallischer Werkstücke wie Strahlbohrung mit Elektronen- oder Ionenstrahlen, Funkenerosionsbohrung und Laserstrahlbohrung zu ersetzen, führten letzlich nicht zu dem gewünschten Erfolgt. Zwar liess sich mit Laserstrahlbohrung eine Filterkerze mit rohrförmiger selbsttragender Kerzenwand von genügender Wandstärke mit kreisrunden bzw. kegelstumpfförmigen Oeffnungen für den Durchtritt der Flüssigkeit herstellen, die in filtrationstechnischer Hinsicht ausgezeichnete Ergebnisse lieferte und die auch in Serienproduktion herstellbar gewesen wäre und bei der ausserdem bei der Produktion auch von einem Rohr anstatt von einem nachträglich zu einem Rohr zu biegenden ebenen Blech hätte ausgegangen werden können und damit Probleme wie das zuvor erwähnte Problem beim Stumpfverschweissen von vornherein ausgeschaltet gewesen wären (US-A-4,288,330), aber der an sich zu erwartende Erfolg dieser Filterkerze scheiterte letzlich auch an ihren Herstellungskosten, weil die Kerzenwand einer solchen Filterkerze eine in der Grössenordnung von einer Million liegende Anzahl von Oeffnungen aufweisen muss und der für die Herstellung einer so grossen Anzahl von Oeffnungen erforderliche technische Aufwand auch mit Laserstrahlbohrung nicht in einem vertretbaren Rahmen gehalten werden konnte. Auch die Erwartung, dass diese Herstellungskosten sich mit der ständigen Weiterentwicklung der Laserstrahltechnik noch wesentlich reduzieren würden, hat sich jedenfalls bislang nicht erfüllt.

Nachdem sich auch hier wiederum gezeigt hatte, dass Filterkerzen mit einer selbsttragenden, mit Durchtritten für die Flüssigkeit versehenen rohrförmigen Kerzenwand zwar recht gute Filtrationsergebnisse liefern und auch alle anderen an rückspülbare Filterkerzen für Anschwemm-Kerzenfilter zu stellenden Anforderungen wie gute Rückspülbarkeit, Stossunempfindlichkeit usw. erfüllen, dass aber eine Herstellung solcher Filterkerzen mit den filtertechnischen Anforderungen genügenden Kerzenwandstärken in Serienproduktion mit konventionellen Produktionsmethoden praktisch ausgeschlossen ist und mit modernen strahltechnischen Produktionsverfahren nur mit einem unverhältnismässig hohem Herstellungsaufwand möglich wäre, weil die Anbringung einer grossen Anzahl von sehr kleinen, genau dimensionierten Oeffnungen in einem Stahlblech von relativ grosser Blechstärke mit beträchtlichen technologischen Schwierigkeiten bzw. einem sehr hohen technischen Aufwand verbunden ist, wurden Versuche mit dem Ziel unternommen, durch die Verwendung von porösen Materialien für die Kerzenwand auf die Einbringung solcher Oeffnungen in Vollmaterial bei der Herstellung der Kerzenwand ganz verzichten zu können. Und obwohl diese Versuche zunächst nur sehr wenig aussichtsreich erschienen, weil poröse Materialien im Filterbetrieb erfahrungsgemäss zu Verstopfungen neigen und solche Verstopfungen bei Filterkerzen für Anschwemm-Kerzenfilter wegen des dadurch notwendig werdenden häufigen Auswechselns der Kerzen unter keinen Umständen akzeptabel sind, ergab sich überraschenderweise, dass sich bestimmte, bisher für Staubfilter im Bergbau verwendete poröse Filterrohre aus aneinandergesinterten Partikeln des hochmolekularen, chemikalien- und wasserbeständigen Kunststoffes Polyäthylen mit mittleren Partikelgrössen zwischen 20 und 100 µm und mit einer mittleren Porenweite von 30 bis 50 µm bei genügend grosser Rohrwandstärke bzw. einem Verhältnis von Rohrwandstärke zu Rohrdurchmesser zwischen 0,2 und 0,35 hervorragend als selbsttragende Kerzenwand für Filterkerzen von Anschwemm-Kerzenfiltern eignen und im Gegensatz zu allen vorherigen Erfahrungen mit porösen Filtermaterialien beim Einsatz als selbsttragende Kerzenwand von Filterkerzen in Anschwemm-Kerzenfiltern in keiner Weise oder zumindest jedenfalls nicht mehr als die Metall-Filterkerzen zu Verstopfungen neigen. Es konnten mit diesen Polyäthylen-Filterkerzen sogar besondere, mit Metall-Filterkerzen zuvor nie erreichte Vorteile wie eine 100 %-ige Sicherheit vor Durchbrüchen der Anschwemmschicht und die sich daraus ergebende Möglichkeit eines Weglassens von nachgeschalteten Schichtenfiltern zum Ausfiltern von infolge solcher Durchbrüche ins Filtrat gelangten Mikroorganismen, sehr geringe Herstellungskosten der Filterkerzen, eine beträchtliche Erhöhung der Filtriergüte, stark verminderte Anschwemmzeiten für die Primäranschwemmung, ein besonders unkritisches Verhalten gegenüber Abweichungen in der Verfahrensführung bei der Rückspülreinigung und eine wesentlich erhöhte Sicherheit vor bleibenden Verformungen der Kerzenwand wie Krummbiegen oder Plattdrücken derselben bei Extrembelastungen erzielt werden, so dass mit den Polyäthylen-Filterkerzen alle bei Filterkerzen für Anschwemm-Kerzenfilter auftretenden Probleme und Schwierigkeiten gelöst zu sein schienen, aber im praktischen Betrieb dieser Filterkerzen trat dann ein neues Problem auf, das alle in diese Polyäthylen-Filterkerzen gesetzten Erwartungen zunichte machte : Während einer praktischen Erprobungsphase, in der die Filterkerzen nach umfangreichen Laboruntersuchungen unter den im praktischen Betrieb herrschenden Bedingungen in Langzeitversuchen getestet wurden, brach bei einigen der in ein Anschwemm-Kerzenfilter eingesetzten Polyäthylen-Filterkerzen die Kerzenwand entweder aus dem dieselbe am oberen Ende von aussen und innen umgreifenden, ringwannenförmigen Endstück heraus oder aber unmittelbar unter diesem Endstück ab, und nähere Untersuchungen ergaben dann, dass die ja nur einseitig an der Tragplatte aufgehängten Filterkerzen in grossen Anschwemm-Kerzenfiltern mit 100 und mehr Filterkerzen und damit also bei nahezu allen im praktischen Betrieb befindlichen Anschwemm-Kerzenfiltern im Gegensatz zu den nur einige wenige Filterkerzen umfassenden, in Versuchslaboratorien benutzten Anschwemm-Kerzenfiltern einer Wechsel-Biegebeanspruchung ausgesetzt sind, die entweder bei dem täglichen Rückspülvorgang oder aber durch Turbulenzen im Einströmbereich des Filters unterhalb der Filterkerzen verursacht werden, und dass solche Wechselbelastungen auf jeden Fall bei Materialien, die wie die Kerzenwand der Polyäthylen-Filterkerzen aus aneinandergesinterten Kunststoffpartikeln bestehen, zu Ermüdungserscheinungen und damit zu dem Risiko eines Ermüdungsbruches führen, und mit dieser Feststellung waren alle Aussichten zunichte gemacht, die Polyäthylen-Filterkerzen im praktischen Betrieb einsetzen zu können.

Natürlich waren diese Wechselbelastungen auch schon bei den früher entwickelten Filterkerzen aufgetreten, und dass sie dort nicht zu Ausfällen geführt hatten und daher zuvor nicht in Erscheinung getreten waren, lag offensichtlich daran, dass bei allen diesen früher entwickelten Filterkerzen, die im praktischen Betrieb oder zumindest in einer praktischen Erprobungsphase in einem Anschwemm-Kerzenfilter mit der üblichen Grösse von 100 oder mehr Filterkerzen eingesetzt worden waren, ein rohrförmiges Lochblech als Kerzenwand oder Teil derselben vorgesehen war, das rundum mit dem oberen Anschlussstück zur Aufhängung und Befestigung der Filterkerze an der Trennwand verschweisst war, so dass die besagten negativen Erfahrungen mit dem Polyäthylen-Filterkerzen darauf hinzudeuten schienen, dass man vor ähnlichen Erfahrungen mit den früheren Filterkerzen hauptsächlich aufgrund der Ausbildung dieser Filterkerzen mit einem Lochblech und Rundumverschweissung desselben mit dem oberen Anschlussstück bewahrt geblieben war und dass daher zur Vermeidung ähnlicher negativer Erfahrungen bei zukünftigen Entwicklungen an dieser Ausbildung festgehalten werden sollte. Diese Auffassung stellte praktisch natürlich eine Beschränkung in den Entwicklungsmöglichkeiten dar, weil mit Ausnahme der eingangs erörterten Kerzenkonstruktion, die sich in der Praxis durchgesetzt hat, alle bisherigen Kerzenkonstruktionen mit Lochblech auf zum Teil unüberwindliche Hindernisse für die Serienproduktion gestossen waren und Anregungen zu Kerzenkonstruktionen ohne Lochblech faktisch blockiert wurden, so dass diese Auffassung praktisch darauf hinauslief, entweder bei der alten Kerzenkonstruktion, die sich in der Praxis durchgesetzt hatte, zu bleiben oder aber ein neues rationelles Produktionsverfahren für die Anbringung der Oeffnungen für den Flüssigkeitsdurchtritt in einer selbsttragenden Kerzenwand von genügend grosser Wandstärke zu finden, und die Aussichten dafür waren ja, wie langjährige vorangegangene Entwicklungen gezeigt hatten, ausserordentlich gering.

Der Erfindung lag nun die Aufgabe zugrunde, ungeachtet der mannigfaltigen Schwierigkeiten, die sich aus der grossen Anzahl der an eine Filterkerze für Anschwemm-Kerzenfilter zu stellenden Anforderungen und den in der Praxis im Hinblick auf die Notwendigkeit rationeller Produktionsverfahren bestehenden Schranken für die Realisierbarkeit von in filtrationstechnischer Hinsicht optimalen Ausbildungsformen ergeben, eine Filterkerze der eingangs genannten Art zu schaffen, die in filtrationstechnischer Hinsicht der eingangs erörterten bekannten Filterkerze, die sich bisher in der Praxis durchgesetzt hat, mindestens ebenbürtig ist und in diesem Zusammenhang insbesondere auch ein gutes Rückspülverhalten und eine genügende Stabilität gegenüber den mechanischen Beanspruchungen beim Filtrierbetrieb und beim Rückspülen aufweist und die zudem aber im Vergleich zu dieser bekannten Filterkerze praktisch nicht stossempfindlich ist und sich insbesondere mit einem wesentlich geringeren technischen Aufwand bzw. mit wesentlich geringeren Produktionskosten herstellen lässt.

Erfindungsgemäss wird das bei einer Filterkerze der eingangs genannten Art dadurch erreicht, dass die Kerzenwand von einem Traggerüst aus einer Vielzahl von in Kerzenlängsrichtung verlaufenden, im gleichen Abstand von der Kerzenachse und im gleichen Winkelabstand voneinander angeordneten Tragstäben und einem im wesentlichen schraubenlinienförmig auf das Traggerüst aufgebrachten und an jeder Berührungsstelle mit einem Tragstab mit demselben verschweissten Draht gebildet ist, dessen Querschnitt an der Aussenseite der Kerzenwand eine mindestens annähernd in Kerzenlängsrichtung verlaufende, im wesentlichen geradlinige Begrenzung aufweist und sich nach dem Kerzeninnern zu verjüngt und zwischen dessen jeweils benachbarten Windungen ein sich nach dem Kerzeninnern zu erweiternder Spalt mit einer Spaltbreite von weniger als 250 $\mu$m an der Aussenseite der Kerzenwand vorgesehen ist, und dass die Kerzenwand dadurch mit dem oberen Anschlussstück verbunden ist, dass das Anschlussstück mit den Tragstäben des Traggerüstes der Kerzenwand verschweisst ist.

Hauptvorteil der vorliegenden Filterkerze ist, dass die Vorteile der eingangs zuerst erörterten beiden Filterkerzen, also der Filterkerze mit einer Kerzenwand aus einem Lochblech und einem darauf gewundenen dünnen Draht und der Filterkerze mit einer Schraubenfeder aus einem dicken Federdraht als Kerzenwand, in der vorliegenden Filterkerze vereinigt werden können, ohne dass auch gleichzeitig die Nachteile dieser beiden Filterkerzen bei der vorliegenden Filterkerze in Kauf genommen werden bräuchten. So weist die vorliegende Filterkerze zwar ebenso wie die Filterkerze mit Lochblech und aufgewundenen dünnen Draht Tragmittel in Form des Traggerüstes für den auf die Tragmittel aufgewundenen Draht und damit den sich mit diesen Tragmitteln ergebenden Vorteil einer relativ grossen mechanischen Stabilität, nicht aber den mit dem Lochblech als Tragmittel bei der Filterkerze mit Lochblech und aufgewundenem dünnen Draht verbundenen Nachteil einer mindestens 60 %-igen Abdeckung der Kerzenwandfläche durch dieses Lochblech und insbesondere auch nicht die darauf zurückzuführenden Folgenachteile wie die sich zwangsläufig daraus ergebende Bedingung der Verwendung eines relativ dünnen Drahtes für den auf das Lochblech aufzuwindenden Draht und die letztlich zum grossen Teil daraus resultierenden hohen Herstellungskosten der Filterkerze mit Lochblech und aufgewundenem dünnen Draht auf, denn die in Kerzenlängsrichtung verlaufenden Tragstäbe bei der vorliegenden Filterkerze kreuzen den aufgewundenen Draht nur und berühren die einzelnen Windungen des im wesentlichen rechtwinklig zu den Tragstäben verlaufenden Drahtes daher lediglich an annähernd punktförmigen Berührungsstellen, so dass das von den Tragstäben gebildete Traggerüst bei der vorliegenden Filterkerze nur einen vernachlässigbaren und auf jeden Fall unter 5 % liegenden Bruchteil der Kerzenwandfläche abdeckt, und damit wiederum ergibt sich natürlich aus den oben im Zusammenhang mit der Filterkerze mit Lochblech und aufgewundenen dünnen Draht erläuterten Gründen die Möglichkeit, für den auf das Traggerüst aufzuwindenden Draht bei der vorliegenden Filterkerze einen wesentlich dickeren Draht bzw. allgemein einen Draht von wesentlich grösserem Drahtquerschnitt als bei der Filterkerze mit Lochblech und aufgewundenem dünnen Draht zu verwenden, und das bringt natürlich erstens den Vorteil einer wesentlichen Verringerung des Produktionsaufwandes sowohl infolge der entsprechend geringeren Windungszahl des Drahtes auf dem Traggerüst als auch infolge des Wegfalls der beim Verlöten oder Verschweissen von sehr dünnen Drähten entstehenden Schwierigkeiten und damit eine ganz beträchtliche Reduzierung der Herstellungskosten für die vorliegende Filterkerze, zweitens den Vorteil einer grösseren Eigenstabilität des auf das Traggerüst aufgewundenen Drahtes bei der vorliegenden Filterkerze und in Verbindung damit die Möglichkeit, diese Eigenstabilität des aufgewundenen Drahtes in die Gesamtstabilität der Kerzenwand einzubeziehen und damit anstelle des bei der bekannten Filterkerze allein das tragende Teil bildenden und letztlich deswegen auch mindestens 60 % der Kerzenwandfläche abdeckenden Lochbleches ein nur einen Teil der Gesamtstabilität der Kerzenwand erzeugendes und daher wesentlich weniger Platz einnehmendes, die Kerzenwand praktisch garnicht abdeckendes Traggerüst aus einigen wenigen Tragstäben zu verwenden, und drittens den sich aus der wesentlich grösseren Eigenstabilität des aufgewundenen Drahtes ergebenden Vorteil einer praktisch als Stossunempfindlichkeit anzusprechenden wesentlich geringeren Stossempfindlichkeit mit sich. Ausserdem hat die vorliegende Filterkerze gegenüber der Filterkerze mit Lochblech und aufgewundenem dünnen Draht noch den beträchtlichen Vorteil, dass der auf das Traggerüst aufgewundene Draht die einzelnen Tragstäbe des Traggerüsts wie schon erwähnt nur an punktförmigen Berührungsstellen berührt und die Verbindung des Drahtes mit den Tragstäben daher durch punktförmiges Verschweissen erfolgen kann und das in produktionstechnischer Hinsicht natürlich wesentlich einfacher als das bei der Filterkerze mit Lochblech und aufgewundenem dünnen Draht erforderliche linienförmige Verlöten oder Verschweissen des jeweils über eine längere Strecke auf dem Lochblech aufliegenden Drahtes mit dem Lochblech ist, so dass auch dadurch nochmals bedeutende Produktionsvereinfachungen und eine entsprechende wesentliche Verringerung der Herstellungskosten der vorliegenden Filterkerze erzielbar sind und die vorliegende Filterkerze somit mit einem geringfügigen Bruchteil des technischen Aufwandes herstellbar ist, der für die Filterkerze mit Lochblech und aufgewundenem dünnen Draht erforderlich war, und zudem gegenüber dieser bekannten Filterkerze noch den Vorteil der Stossunempfindlichkeit hat. Die vorliegende Filterkerze weist also ebenso wie die eingangs an zweiter Stelle erörterte Schraubenfederkerze den Vorteil geringer Herstellungskosten und den Vorteil der Stossunempfindlichkeit auf, sie ist aber nicht mit den Nachteilen dieser Schraubenfederkerze behaftet, weil sie im Gegensatz zu der Schraubenfederkerze keine stark wellige Oberfläche an der Aussenseite der Kerzenwand sondern wegen der in Kerzenlängsrichtung verlaufenden geradlinigen Begrenzung des Querschnittes des auf das Traggerüst aufgewundenen Drahtes an der Aussenseite der Kerzenwand eine ganz glatte und somit die Ablösung des Filterkuchens bei der Rückspülung und das Abrutschen desselben in Kerzenlängsrichtung nach unten stark erleichternde Oberfläche an der Aussenseite der Kerzenwand hat und weil bei der vorliegenden Filterkerze bei ungleichmässiger Druckverteilung längs des Kerzenumfanges Einbuchtungen der Kerzenwand auf der Seite des höheren Druckes und entsprechende Ausbuchtungen auf der Seite des niedrigeren Druckes wie bei der Schraubenfederkerze durch die in Kerzenlängsrichtung verlaufenden und mit dem aufgewundenen Draht verschweissten Tragstäbe verhindert werden. Das Rückspülverhalten der vorliegenden Filterkerze ist demgemäss wesentlich besser als bei der Schraubenfederkerze und sogar noch etwas besser als bei der Filterkerze mit Lochblech und aufgewundenem dünnen Draht, weil auch die letztere infolge des aufgewundenen dünnen Drahtes noch eine gewisse Oberflächenwelligkeit an der Aussenseite der Kerzenwand aufweist, jedoch nicht besser als bei den ebenfalls eine glatte Oberfläche an der Aussenseite der Kerzenwand aufweisenden Filterkerzen mit selbsttragender Kerzenwand und nur unwesentlich besser als bei der eine etwas rauhe Oberfläche an der Aussenseite der Kerzenwand aufweisenden Polyäthylen-Filterkerze. In Bezug auf die Stabilität der Anschwemmschicht bzw. die Sicherheit vor Durchbrüchen derselben ist die vorliegende Filterkerze wesentlich besser als die Schraubenfederkerze und auch noch um einiges besser als die Filterkerze mit Lochblech und aufgewundenem dünnen Draht, weil bei der vorliegenden Filterkerze die sich an den Spalt bzw. die engste Stelle desselben anschliessenden, die Anschwemmschicht tragenden Wände quer zur Hauptströmungsrichtung im Spalt und bei den beiden vorgenannten Filterkerzen kreisförmig verlaufen und sich daher bei der vorliegenden Filterkerze über dem Spalt ein tunnelförmiges Gewölbe aus Filterhilfsmittelpartikeln mit einer wesentlich grösseren Stabilität als der Stabilität der brückenbogenartigen Spaltüberbrückungen bei den beiden vorgenannten Filterkerzen aufbaut, aber die mit der vorliegenden Filterkerze erzielbare Stabilität der Anschwemmschicht reicht andererseits nicht an die mit den genannten bekannten Filterkerzen mit selbsttragender Kerzenwand erzielbare Stabilität und natürlich auch nicht an die 100 %-ige Sicherheit vor Durchbrüchen der Anschwemmschicht bei der Polyäthylen-Filterkerze heran, weil erstens die Stabilität der sich über kreisförmigen oder kurzen spaltförmigen Oeffnungen in der Kerzenwand aufbauenden domartigen bzw. tonnenförmigen Gewölbe aus Filterhilsmittelpartikeln grösser als die Stabilität des sich bei der vorliegenden Filterkerze aufbauenden tunnelförmigen Gewölbes ist und zweitens bei der vorliegenden Filterkerze ja nicht eine Vielzahl von Oeffnungen wie bei den Filterkerzen mit selbsttragender Kerzenwand sondern nur ein einziger schraubenlinienförmiger Spalt vorhanden ist und sich daher ein an einer Stelle dieses Spaltes erfolgender Durchbruch bzw. Zusammenbruch des tunnelförmigen Gewölbes über grosse Teile der Gesamtlänge dieses einen einzigen Spaltes fortpflanzen kann, während demgegenüber ein Durchbruch bzw. Zusammenbruch des Gewölbes über einer Oeffnung in einer der Filterkerzen mit selbsttragender Kerzenwand in der Regel auf den Bereich dieser Oeffnung beschränkt bleibt und daher keine so grossen Auswirkungen wie bei der vorliegenden Filterkerze haben kann. Trotzdem ist die mit der vorliegenden Filterkerze gegenüber der Schraubenfederkerze und insbesondere der Filterkerze mit Lochblech und aufgewundenem dünnen Draht erreichte Verbesserung der Stabilität der Anschwemmschicht als Vorteil zu werten, weil die hohen Stabilitäten der Anschwemmschicht bei den Filterkerzen mit selbsttragender Kerzenwand und der Polyäthylen-Filterkerze und auch alle aus diesen hohen Stabilitäten resultierenden weiteren Vorteile in der Praxis wegen der obenerwähnten Produktionsschwierigkeiten bei den Filterkerzen mit selbsttragender Kerzenwand und der ebenfalls erwähnten Ermüdungsbruchgefahr bei den Polyäthylen-Filterkerzen ja nicht realisierbar sind und mit der vorliegenden Filterkerze daher die höchste in der Praxis realisierbare Stabilität der Anschwemmschicht erzielt wird. In Bezug auf die Stabilität gegenüber den mechanischen Beanspruchungen beim Filtrierbetrieb und beim Rückspülen ist die vorliegende Filterkerze allen bisherigen Kerzenkonstruktionen überlegen, weil das Traggerüst zusammen mit dem darauf aufgewundenen und an jedem einzelnen Berührungspunkt mit den Tragstäben verschweissten Draht eine Art Tragwerk in Käfigform bildet, bei dem die Gefahr eines Plattdrückens der Kerzenwand, infolge eines beträchtlich überhöhten Filtrationsdruckes, die bei den Filterkerzen mit selbsttragender Kerzenwand und in etwas geringerem Masse auch bei der Filterkerze mit Lochblech und aufgewundenem dünnen Draht besteht, durch den einen relativ grossen Querschnitt aufweisenden und zusätzlich noch durch die Tragstäbe zusammengehaltenen schraubenlinienförmigen Draht und die Gefahr eines Krummbiegens oder Einbuchtens der Filterkerze infolge ungleichmässiger Druckverteilung längs des Kerzenumfanges, die bei allen obenerwähnten Metall-Filterkerzen besteht, durch die in Kerzenlängsrichtung verlaufenden und an dem schraubenlinienförmigen Draht befestigten Tragstäbe und die Gefahr eines Ermüdungsbruches im Bereich des oberen Anschlussstückes infolge von Wechsel-Biegebelastungen der Kerze, die bei der Polyäthylen-Filterkerze besteht, durch die eine ähnlich stabile und wechselbelastungsfeste Verbindung zwischen Kerzenwand und oberem Anschlussstück wie das Rundumverschweissen des bei den Metall-Filterkerzen die Kerzenwand oder einen Teil derselben bildenden rohrförmigen Lochbleches mit dem oberen Anschlussstück darstellende Verschweissung der die Biegebelastungen aufnehmenden Tragstäbe mit dem oberen Anschlussstück ausgeschlossen wird.

Bei einer bevorzugten Ausbildungsform der vorliegenden Filterkerze ist das untere Ende des oberen Anschlussstückes mit dem oberen Ende der Tragstäbe des Traggerüstes der Kerzenwand verschweisst. Das hat den Vorteil einer Vereinfachung des Schweissvorganges und einer dadurch erreichbaren höheren Sicherheit einer guten Verschweissung aller Tragstäbe mit dem oberen Anschlussstück. Vorzugsweise ist hierzu das untere Ende des oberen Anschlussstückes von einem Ringbuckel gebildet, dessen Durchmesser dem Doppelten des Abstandes der Tragstäbe von der Kerzenachse entspricht. Das hat den Vorteil definierter Schweissstellen jeweils etwa längs einer die obere Endfläche der Tragstäbe halbierenden Mittellinie und sichert daher auch bei etwaigen, im Rahmen der Arbeitsgenauigkeit liegenden geringen Versetzungen der Achsen von Kerzenwand und oberem Anschlussstück gegeneinander die erforderliche gute Verschweissung aller Tragstäbe mit den oberen Anschlussstück. Zweckmässig ist die den Ringbuckel bildende Erhöhung im Querschnitt dreieckförmig und derart mit dem oberen Ende der Tragstäbe verschweisst, dass der Abstand zwischen dem Fuss des Ringbuckels am unteren Ende des oberen Anschlussstückes und dem oberen Ende der Tragstäbe kleiner als die Höhe des Ringbuckels und vorzugsweise kleiner als die halbe Höhe desselben ist, dass also der Ringbuckel beim Verschweissen sozusagen in das Material der Tragstäbe einsinkt, denn dadurch erhöht sich die Querschnittsfläche der Schweissstellen und damit deren Belastbarkeit, was für eine sichere Verbindung der Tragstäbe mit dem oberen Anschlussstück von Vorteil und auch insofern von Bedeutung ist, als die Querschnittsfläche an den Schweissstellen zur Vermeidung von Ueberlastungsbrüchen an denselben auf jeden Fall grösser als die Querschnittsfläche der Tragstäbe sein sollte. Ein weiterer Vorteil des besagten Einsinkens des Ringbuckels beim Verschweissen ist, dass dadurch auch eventuelle geringe Längendifferenzen der Tragstäbe bzw. eventuelle geringe Differenzen zwischen den Abständen der oberen Enden der Tragstäbe vom Fuss des Ringbuckels ausgeglichen werden.

Vorzugsweise ist bei der vorliegenden Filterkerze auch das Verschlussstück mit den Tragstäben des Traggerüstes der Kerzenwand verschweisst und hierzu zweckmässig ebenfalls mit einem Ringbuckel mit einem dem Doppelten des Abstandes der Tragstäbe von der Kerzenachse entsprechenden Durchmesser versehen. Das hat den Vorteil, dass die Stabilität des oben erwähnten, von dem Traggerüst und dem aufgewundenen und mit demselben verschweissten Draht gebildeten Tragwerks in Käfigform und damit natürlich auch die Stabilität der vorliegenden Filterkerze insgesamt gegenüber den mechanischen Beanspruchungen beim Filtrierbetrieb und beim Rückspülen noch wesentlich erhöht wird, weil der « Käfig » bei mit den Tragstäben verschweisstem Verschlussstück auch unten geschlossen ist, was insbesondere eine Stabilitätserhöhung gegenüber Biegebeanspruchungen der Kerze mit sich bringt.

Ebenfalls aus Stabilitätsgründen sollte vorteilhaft der Querschnitt jedes Tragstabes des Traggerüstes der Kerzenwand grösser als der Querschnitt des im wesentlichen schraubenlinienförmig auf das Traggerüst aufgebrachten Drahtes sein, und zwar vorzugsweise mindestens zweimal so gross und zweckmässig 2- bis 6-mal so gross wie dieser Drahtquerschnitt. Dabei ist bei einer vorteilhaften Ausbildungsform der vorliegenden Filterkerze der Querschnitt jedes Tragstabes des Traggerüstes im wesentlichen quadratisch und jeder Tragstab ist auf seiner den Windungen des Drahtes zugewandten Seite mit einer in Stablängsrichtung verlaufenden, seine Verschweissung mit den einzelnen Drahtwindungen erleichternden buckelförmigen Erhöhung versehen. Der Vorteil dieser buckelförmigen Erhöhung liegt darin, dass sich dadurch zumindest bei Beginn der Verschweissung einer Drahtwindung mit einem Tragstab eine de facto punktförmige Berührungsstelle ergibt, was das Verschweissen des Drahtes mit den Tragstäben so stark vereinfacht, dass der Draht unmittelbar beim Aufwinden auf die in einer rotierenden Walze gehalterten Tragstäbe mit denselben verschweisst werden kann.

Vorteilhaft kann bei der vorliegenden Filterkerze der im wesentlichen schraubenlinienförmig auf das Traggerüst aufgebrachte Draht im Querschnitt im wesentlichen die Form eines spitzwinkligen gleichschenkligen Dreiecks haben, dessen Höhe vorzugsweise grösser als seine Grundlinie ist, und derart auf das Traggerüst aufgebracht sein, dass die Grundlinie des seinen Querschnitt bildenden Dreiecks auf der Aussenseite der Kerzenwand liegt und die Spaltbreite zwischen jeweils benachbarten Windungen des Drahtes vorzugsweise kleiner als ein Viertel der Länge der Grundlinie des Dreiecks ist. Diese Ausbildungsform hat erstens den Vorteil einer maximalen Stabilität der Kerzenwand gegenüber überhöhten, im Sinne eines Plattdrückens der Kerzenwand wirkenden Filtrationsdrücken und ist auch im Hinblick auf die vorgenannte erwünschte punktförmige Berührungsstelle zwischen Draht und Tragstab vorteilhaft. Bei einer besonders vorteilhaften Ausführungsform der vorliegenden Filterkerze hat das den Querschnitt des Drahtes bildende Dreieck eine Grundlinie von ungefähr 1 mm und eine Höhe von ungefähr 2 mm und die Spaltbreite zwischen jeweils benachbarten Windungen des Drahtes liegt im Bereich von 80 bis 120 μm.

Die Erfindung betrifft weiter die Verwendung eines Spaltrohres mit einem Traggerüst aus einer Vielzahl von in Rohrlängsrichtung verlaufenden, im gleichen Abstand von der Rohrachse und in gleichem Winkelabstand voneinander angeordneten Tragstäbe und einem im wesentlichen schraubenlinienförmig auf das Traggerüst aufgebrachten und an jeder Berührungsstelle mit einem Tragstab mit demselben verschweissten Draht, dessen Querschnitt an der Rohraussenseite eine mindestens annähernd in Rohrlängsrichtung verlaufende, im wesentlichen geradlinige Begrenzung aufweist und sich nach dem Rohrinnern zu verjüngt und zwischen dessen jeweils benachbarten Windungen ein sich nach dem Rohrinnern zu erweiternder Spalt vorgesehen ist, als selbsttragende Kerzenwand für eine für Anschwemm-Kerzenfilter mit hängend eingebauten Filterkerzen vorgesehene Filterkerze.

Spaltrohre dieser Art sind z. B. aus US-A-20 46 458 bekannt und werden hauptsächlich bei der Erdölförderung zur Auskleidung und Armierung von Bohrlöchern und daneben auch bei der Wasseraufbereitung in Sand- und Kiesfiltrationsanlagen eingesetzt, aber die Anforderungen, die in diesen Bereichen der Technik an die Spaltrohre gestellt werden, sind so grundlegend verschieden von den an eine rückspülbare Filterkerze für Anschwemm-Kerzenfilter mit hängend eingebauten Filterkerzen zu stellenden Anforderungen, dass diese Spaltrohre von ihren bekannten Einsatzmöglichkeiten her dem auf dem Spezialgebiet der Anschwemmfiltration tätigen Fachman keine Anregung für eine Verwendung derselben als rückspülbare Filterkerzen für Anschwemm-Kerzenfilter vermitteln konnten. So treten beispielsweise mechanische Beanspruchungen von ähnlicher Art wie die zur Gefahr eines Krummbiegens oder eines Plattdrückens der Kerzenwand oder eines durch Wechsel-Biegebeanspruchungen verursachten Ermüdungsbruches derselben führenden Beanspruchungen einer Filterkerze für Anschwemm-Kerzenfilter bei Spaltrohren in deren bekannten Einsatzbereichen überhaupt nicht auf, so dass der Fachmann in Anbetracht dessen, dass nur die Lösung aller mit den mechanischen Beanspruchungen von Filterkerzen in Anschwemm-Kerzenfiltern zusammenhängenden Probleme den Schlüssel zu einer allen Anforderungen entsprechenden Filterkerze liefern kann, keine Veranlassung hatte, in Bereichen der Technik wie den Einsatzbereichen von Spaltrohren, in denen keine mit den Beanspruchungen von Filterkerzen vergleichbaren mechanischen Beanspruchungen auftreten, nach Verwendungsmöglichkeiten von dort benutzten technischen Mitteln für Filterkerzen bzw. — da eine unmittelbare Verwendung der bekannten Spaltrohre für Filterkerzen schon wegen der ganz verschiedenen Dimensionen der bekannten Spaltrohre einerseits und der üblichen Filterkerzen andererseits ohnehin nicht möglich wäre — nach einem neuen Konstruktionsprinzip für Filterkerzen zu suchen.

Anhand der nachstehenden Figuren ist die Erfindung im folgenden an einem Ausführungsbeispiel näher erläutert. Es zeigen

Fig. 1 ein Ausführungsbeispiel einer Filterkerze nach der Erfindung, teilweise im Längsschnitt in der Schnittebene II-II (Fig. 2),

Fig. 2 einen Querschnitt durch die Filterkerze in Fig. 1 in der Schnittebene I-I,

Fig. 3 eine Darstellung des Teilbereiches A in Fig. 1 im vergrösserten Massstab und

Fig. 4 eine Darstellung des Teilbereiches B in Fig. 1 im vergrösserten Massstab.

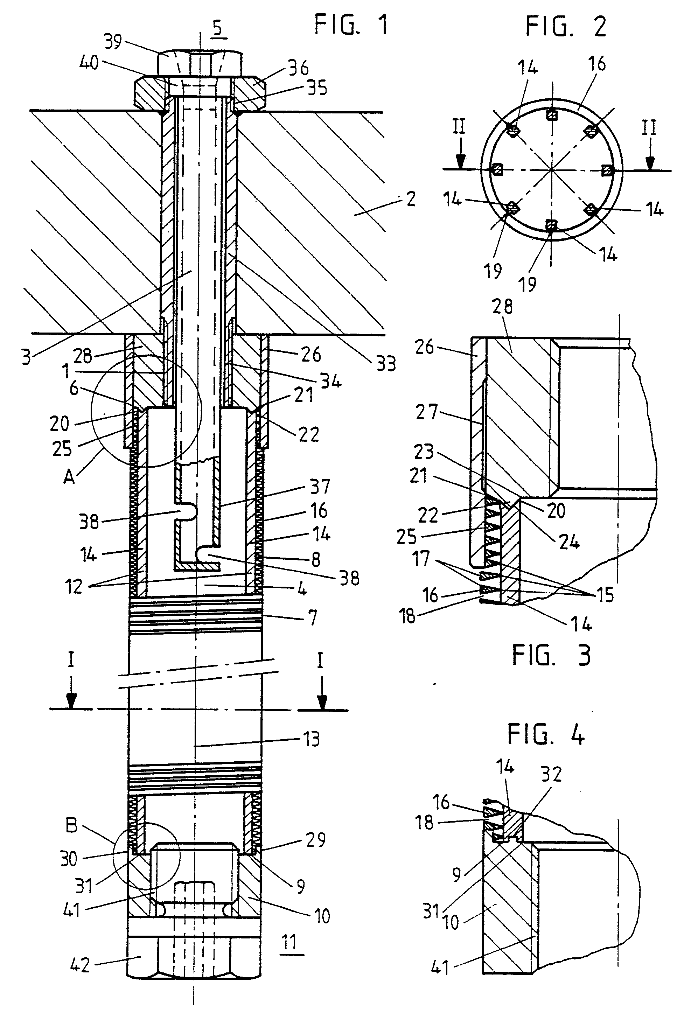

Die Filterkerze in Fig. 1 besteht aus dem oberen Anschlussstück zur Aufhängung und Befestigung der Filterkerze an der Trennwand 2, das mit einem durch dasselbe hindurchlaufenden Abflusskanal 3 zur Abführung von Filtrat aus dem Filterkerzeninnenraum 4 in den Filtratraum 5 versehen ist, der im Bereich ihres oberen Endes 6 mit dem Anschlussstück 1 verbundenen, im wesentlichen rohrartigen und an ihrer Aussenseite 7 zylinderförmigen Kerzenwand 8, deren Aussenseite 7 als Tragorgan für eine mindestens zum Teil aus Filterhilfsmittel gebildete, die Filtrierung übernehmende Anschwemmschicht vorgesehen ist, und einem im Bereich des unteren Endes 9 der Kerzenwand 8 an derselben angebrachten Verschlussstück 10 zur Abtrennung des Filterkerzeninnenraumes 4 vom Unfiltratraum 11.

Die Kerzenwand 8 der in Fig. 1 gezeigten Filterkerze wird von einem Traggerüst 12 aus acht in Kerzenlängsrichtung verlaufenden, im gleichen Abstand von der Kerzenachse 13 und im gleichen Winkelabstand von 45° voneinander (Fig. 2) angeordneten Tragstäben 14 und einem im wesentlichen schraubenlinienförmig auf das Traggerüst 12 aufgebrachten und an jeder Berührungsstelle 15 mit einem Tragstab 14 mit demselben verschweissten Draht 16 gebildet. Der Draht 16 hat im Querschnitt im wesentlichen die Form eines spitzwinkligen gleichschenkligen Dreiecks von ca. 1 mm Grundlinie und ca. 2 mm Höhe und ist derart auf das Traggerüst 12 aufgebracht, dass die Grundlinie des seinen Querschnitt bildenden Dreiecks auf der Aussenseite 7 der Kerzenwand 8 liegt und in Kerzenlängsrichtung verläuft und dass zwischen jeweils benachbarten Windungen 17 des Drahtes 16 ein sich nach dem Kerzeninnern 4 zu erweiternder Spalt 18 mit einer Spaltbreite von ca. 100 μm an der Aussenseite 7 der Kerzenwand 8 gebildet wird. Die Tragstäbe 14 des Traggerüstes 12 sind im Querschnitt im wesentlichen quadratisch, wobei das Quadrat eine Seitenlänge von ca. 2 mm hat, und jeder Tragstab ist auf seiner den Windungen 17 des Drahtes 16 zugewandten Seite mit einer Stablängsrichtung verlaufenden buckelförmigen Erhöhung 19 von einem ungefähr die Form eines gleichseitigen Dreiecks mit einer Seitenlänge von ca. 0,6 mm und einer Höhe von ca. 0,5 mm aufweisenden Querschnitt versehen, die das Verschweissen des Drahtes 16 mit den Tragstäben 14 wesentlich vereinfacht, weil sich durch die Erhöhung 19 bei Beginn der Verschweissung einer Drahtwindung 17 mit einem Tragstab 14 eine punktförmige Berührungsstelle ergibt und das Verschweissen daher so schnell vor sich geht, dass der Draht 16 unmittelbar beim Aufwinden auf die in einer rotierenden Walze gehalterten Tragstäbe 14 mit denselben verschweisst werden kann, wobei der Schweissstrom direkt über den Draht 16 und die rotierende Walze zugeführt wird. Da der Draht 16 beim Verschweissen mit den Tragstäben 14 erhitzt wird und beim Aufwinden auf die Tragstäbe 14 unter Zug steht, wird die Kerzenwand 8 an ihrer Aussenseite 7 nicht genau zylinderförmig bzw. im Querschnitt kreisförmig sondern nimmt im Querschnitt eine Uebergangsform zwischen einem Kreis und einem eingeschriebenen Achteck an. Im Bereich ihres oberen Endes 6 ist die Kerzenwand 8 dadurch mit dem oberen Anschlussstück 1 verbunden, dass die Tragstäbe 14 des Traggerüstes 12 der Kerzenwand 8 an ihren oberen Enden 20 mit dem am unteren Ende 21 des oberen Anschlussstückes 1 vorgesehenen Ringbuckel 22 verschweisst sind. Die den Ringbuckel 22 bildende Erhöhung am unteren Ende 21 des oberen Anschlussstückes 1 ist im Querschnitt dreieckförmig und ist derart mit den oberen Enden 20 der Tragstäbe 14 verschweisst, dass der Abstand zwischen dem Fuss 23 des Ringbuckels 22 am unteren Ende 21 des oberen Anschlussstückes 1 und den oberen Enden 20 der Tragstäbe 14 nahezu Null ist, dass also der Ringbuckel 22 beim Verschweissen praktisch vollständig in das Material der Trasgstäbe 14 einsinkt und sich eine Querschnittsfläche der Schweissstellen 24 von je ca. 6,5 mm$^2$, insgesamt also bei allen acht Tragstäben 14 von ca. 50 mm$^2$ ergibt, die etwa anderthalb mal so gross wie die ca. 33,2 mm$^2$ betragende Querschnittsfläche aller acht Tragstäbe 14 ist. Um die Verschweissung zu erreichen, werden Ringbuckel 22 und Tragstäbe 14 während des Schweissvorganges mit einer Kraft von 500 kg gegeneinandergepresst, wobei sowohl diese Kraft wie auch der Schweissstrom von der Aussenseite 7 der Kerzenwand 8 her auf die Tragstäbe 14 übertragen wird. An der Hauptangriffsstelle für die Uebertragung dieser Kraft und des Schweissstromes wird die Kerzenwand 8 im Bereich ihres oberen Endes 6 über eine Länge von ca. 10 mm abgedreht. Dieser abgedrehte Bereich 25 am oberen Ende 6 der Kerzenwand 8 wird dann durch die Rohrmuffe 26 abgedeckt, die durch eine Klebstoffschicht 27 mit der den Ringbuckel 22 tragenden, zum oberen Anschlussstück 1 gehörenden Mutter 28 verbunden wird. Ausserdem wird die Kerzenwand 8 auch an ihrem unteren Ende 9 über eine Länge von ca. 3 mm abgedreht, wobei dieser abgedrehte Bereich 29 am unteren Ende 9 der Kerzenwand 8 dann von einem Vorsprung 30 an dem Verschlussstück 10 abgedeckt wird. Mit diesem Verschlussstück 10 ist die Kerzenwand 8 ähnlich wie beim oberen Anschlussstück 1 dadurch verbunden, dass die Tragstäbe 14 des Traggerüstes 12 der Kerzenwand 8 an ihren unteren Enden 31 mit dem an dem Verschlussstück 10 vorgesehenen Ringbuckel 32 verschweisst sind. Die den Ringbuckel 32 bildende Erhöhung am Verschlussstück 10 ist im Querschnitt rechteckförmig und hat nur eine sehr geringe Höhe von ca. 0,5 mm. Diese Erhöhung wird beim Verschweissen der unteren Enden 31 der Tragstäbe 14 mit dem Verschlussstück 10 im wesentlichen breitgedrückt und dringt nur sehr wenig in das Material der Tragstäbe 14 ein. Um die Verschweissung zu erreichen, werden Ringbuckel 32 und Tragstäbe 14 während des Schweissvorganges mit einer Kraft von 200 kg gegeneinandergepresst, wobei auch in diesem Fall sowohl diese Kraft wie auch der Schweissstrom von der Aussenseite 7 der Kerzenwand 8 her auf die Tragstäbe 14 übertragen wird.

Die übrigen Teile der in Fig. 1 gezeigten Filterkerze sind in gleicher Weise wie bei den bekannten Filterkerzen der eingangs genannten Art ausgebildet. So umfasst das obere Anschlussstück 1 ausser der bereits genannten Mutter 28 mit dem Ringbuckel 22 und der auf derselben festgeklebten Rohrmuffe 26 noch das in die Trennwand 2 eingesetzte Tragrohr 33, das an seinem unteren Ende mit dem Gewinde 34 zum Aufschrauben der Mutter 28 und an seinem oberen Ende mit dem Gewinde 35 zum Aufschrauben der Befestigungsmutter 36 versehen ist, und ferner das in das Tragrohr 33 eingesetze Spritzrohr 37, mit dem während des Rückspülvorganges die dem Kerzeninnenraum 4 vom Filtratraum 5 her zugeführte Rückspülflüssigkeit über die Schlitzdüsen 38 an die Innenseite der Kerzenwand 8 gespritzt wird und dort nach unten läuft und das während des Filtriervorganges als Abflusskanal 3 dient, und schliesslich am oberen Ende dieses Spritzrohres 37 den Schraubenkopf 39 mit dem Gewindeansatz 40 zum Einschrauben des Spritzrohres 37 in die Befestigungsmutter 36, und das Verschlussstück 10 weist neben dem oben schon genannten Vorsprung 30 und dem Ringbuckel 32 noch die Gewindebohrung 41 auf umfasst ausserdem die in die Gewindebohrung 41 eingeschraubte Verschlussschraube 42 zum Oeffnen und Schliessen des Verschlussstückes 10.

Die oben näher beschriebene, in Fig. 1 gezeigte Filterkerze wurde in einem Versuchsprogramm in einer Vielzahl von Versuchsreihen untersucht und innerhalb dieses Programmes mit der eingangs erörterten bekannten Filterkerze mit Lochblech und aufgewundenem dünnen Draht, die sich bisher allein in der Praxis durchgesetzt hatte, verglichen. Die Versuchsbedingungen innerhalb dieses Versuchsprogramms entsprachen dem gesamten Spektrum der Betriebsbedingungen der bekannten Filterkerze im praktischen Betrieb einschliesslich aller möglichen Extremfälle, die sich bei Betriebsstörungen oder infolge von Fehlbedienung der Kerzenfilter ergeben können und die zum Beispiel zum Plattdrücken oder Krummbiegen der Kerzen führen können. Als Filterhilfsmittel, das dem Unfiltrat während des Filtriervorganges zugesetzt wird und zur Bildung der Primäranschwemmschicht dient, wurde dabei in üblicher Weise wie im praktischen Betrieb Kieselgur mit einer mittleren Partikelgrösse zwischen 5 und 20 µm und einem Streubereich von ca. 1 bis 40 µm verwendet. Das Versuchsprogramm ergab für alle innerhalb der normalen Betriebsbedingungen liegenden Versuchsreihen im Mittel für die vorliegende Filterkerze gegenüber der bekannten Filterkerze eine Erhöhung der Filtriergüte um 69 % bzw. einen um 41 % geringeren Fremdstoffrestanteil im Filtrat, was auf die im Mittel grössere Stabilität der Anschwemmschicht bei der vorliegenden Filterkerze infolge der schon erwähnten Ausbildung eines tunnelförmigen Gewölbes aus Filterhilfsmittelpartikeln über dem Spalt bei der der vorliegenden Filterkerze und einer brückenbogenartigen Spaltüberbrückung aus Filterhilfsmittelpartikeln bei der bekannten Filterkerze oder

— mit den exakten Bezeichnungen — eines langgestreckten Tonnengewölbes bei der vorliegenden Filterkerze und eines langgestreckten Kappengewölbes bei der bekannten Filterkerze zurückzuführen ist, weil die Stabilität eines Tonnengewölbes gegenüber Druckstössen wesentlich grösser als die Stabilität eines Kappengewölbes ist. Weiter wurde bei den innerhalb der normalen Betriebsbedingungen liegenden Versuchsreihen festgestellt, dass das Rückspülverhalten der vorliegenden Filterkerze etwas besser als bei der bekannten Filterkerze war. Zwar funktionierte das Abgleiten der Trubkuchen an der Kerzenwand bei allen Versuchen dieser Versuchsreihen sowohl bei der vorliegenden Filterkerze wie auch bei der bekannten Filterkerze gut, aber die an der bekannten Filterkerze nach dem Abgleiten des Trubkuchens noch hängengebliebenen Trubreste waren in der Regel grösser als bei der vorliegenden Filterkerze. Dieses Ergebnis wurde auch dadurch bestätigt, dass bei der Nachspülung nach der Austragung des breiförmigen Trubes aus dem Filterkessel der Trubstoffrestanteil im Spülwasser bei der bekannten Filterkerze bei einigen speziell zu dieser Ermittlung vorgenommen Tests grösser war als bei der vorliegenden Filterkerze. Bei weiteren speziellen Versuchsreihen zur Ermittlung der Belastbarkeit bei ausserhalb der normalen Betriebsbedingungen liegenden extremen Versuchsbedingungen wurde im Rahmen einer Versuchsreihe die Filtrierleistung und damit der Filtrationsdruck so weit erhöht, bis die mechanische Stabilität einer Filterkerze nicht mehr ausreichte, um dem auf die Kerzenwand wirkenden Druck standzuhalten, und die Filterkerze bzw. die Kerzenwand derselben plattgedrückt wurde. Dabei wurde in allen Fällen, bei denen innerhalb des nach oben durch den maximal zulässigen Filterkesseldruck begrenzten Druckbereiches ein solches Plattdrücken bewirkt werden konnte, ein Exemplar der bekannten Filterkerze plattgedrückt, während es innerhalb dieses Druckbereiches nicht möglich war, auch die vorliegende Filterkerze plattzudrücken. Aus diesen Versuchen ergab sich somit eine wesentlich grössere mechanische Stabilität der vorliegenden Filterkerze gegenüber Druckbelastungen als bei der bekannten Filterkerze. In einer weiteren Versuchsreihe wurde jeweils die Filtration über die normale Filtrationsdauer (die dann beendet ist, wenn der Abstand der Trubkuchen der benachbarten Filterkerzen nur noch wenige Millimeter beträgt) hinaus so weit verlängert, bis die Turbkuchen von benachbarten Filterkerzen zusammengewachsen waren und sich damit ein resultierender Druck auf die benachbarten Filterkerzen in Richtung auf den Bereich dieser Zusammenwachsung und demgemäss eine entsprechende Biegebelastung der Filterkerzen ergab. Bei diesen Versuchen wurde festgestellt, dass in einer Reihe von Fällen nur die bekannte Filterkerze infolge der Biegebelastung plastisch verformt und damit krummgebogen wurde, während die vorliegende Filterkerze in diesen Fällen nur elastisch verformt wurde und sich daher nach Wegfall der Biegebelastung wieder gerade richtete. In anderen Fällen, in denen sowohl die vorliegende wie auch die bekannte Filterkerze durch die Biegebelastung plastisch verformt wurden, war die Verbiegung bei der vorliegenden Filterkerze nur gering, während die bekannte Filterkerze in den gleichen Fällen völlig krummgebogen war. Fälle von etwa gleichen Verbiegungen der vorliegenden Filterkerze und der bekannten Filterkerze tratin der gesamten Versuchsreihe nicht auf, sondern wenn überhaupt bei der vorliegenden Filterkerze eine Verbiegung zu verzeichnen war, so war diese stets wesentlich geringer als im gleichen Fall bei der bekannten Filterkerze. Aus diesen Versuchen ergab sih somit eine wesentlich grössere mechanische Stabilität der vorliegenden Filterkerze gegenüber Biegebelastungen als bei der bekannten Filterkerze, und das gleiche dürfte natürlich auch für Wechsel-Biegebelastungen gelten, wenngleich diesbezüglich in dem gesamten Versuchsprogramm weder bei der vorliegenden Filterkerze noch bei der bekannten Filterkerze irgendwelche Ausfallerscheinungen oder andere nachteilige Auswirkungen der Wechsel-Biegebelastungen aufgetreten sind und sich daher eine durch Versuchsergebnisse fundierte Angabe über das Verhältnis der Wechsel-Biegebelastbarkeit bei der vorliegenden zu der bekannten Filterkerze nicht machen lässt. Im Zusammenhang mit der Biegebelastbarkeit der vorliegenden Filterkerze ist noch auf folgendes hinzuweisen : Im Verlaufe der Entwicklung der vorliegenden Filterkerze wurde zeitweise auch in Erwägung gezogen, die Kerzenwand dadurch mit dem oberen Anschlusstück zu verbinden, dass das obere Anschlussstück eine grössere Anzahl von Windungen des auf die Tragstäbe aufgewundenen und mit denselben verschweissten Drahtes am oberen Ende der Kerzenwand umgreift und kraftschlüssig mit diesen Drahtwindungen verbunden ist. Diesbezügliche Versuche zeigten jedoch, dass die Biegebelastbarkeit einer solchen Verbindung wesentlich geringer ist als bei einer Verbindung zwischen Kerzenwand und oberem Anschlussstück in der Form, dass das Anschlussstück mit den Tragstäben des Traggerüstes der Kerzenwand verschweisst ist, und aus diesem Grunde wurde für die vorliegende Filterkerze auch die letztere Form der Verbindung gewählt. Der Grund für die geringere Biegebelastbarkeit bei einer Verbindung zwischen oberem Anschlussstück und oberen Drahtwindungen der Kerzenwand dürfte darin liegen, dass die Biegemomente bei einer Biegung der Kerze von den Tragstäben aufgenommen werden und dann von den Tragstäben zunächst auf die mit diesen punktverschweissten Drahtwindungen übertragen werden müssen, ehe sie auf das obere Anschlussstück übertragen werden können, denn diese Zwischenschaltung der Drahtwindungen in die Biegemomentübertragung auf das obere Anschlussstück führt dazu, dass bei einer Biegung der Kerze nicht wie bei einer direkten Verbindung zwischen Tragstäben und oberem Anschlussstück die an der Biegungsaussenseite liegenden Tragstäbe gedehnt und die an der Biegungsinnenseite liegenden Tragstäbe gestaucht werden sondern dass bei einer Biegung der Kerze die an der Biegungsaussenseite liegenden Drahtwindungen in Kerzenlängsrichtung nach unten und die an der Biegungsinnenseite liegenden Drahtwindungen in Kerzenlängsrichtung nach oben gekippt werden und die Tragstäbe selbst praktisch überhaupt nicht gedehnt bzw. gestaucht werden, und unter diesen Umständen würde natürlich schon bei einem relativ kleinen, auf die Kerze wirkenden Biegemoment ein solches Kippen der Drahtwindungen und damit eine Schrägstellung der Kerzenwand relativ zu der Achse des oberen Anschlussstückes und bei grösseren Biegemomenten dann ein Herausbrechen der Kerzenwand aus der sie umgreifenden Fassung des oberen Anschlusstückes bewirkt werden. Zu erwähnen ist in diesem Zusammenhang aber noch, dass die Gefahr eines solchen Kippens der Drahtwindungen auch durch eine andere Form einer direkten kraftschlüssigen Verbindung zwischen oberem Anschlussstück und Tragstäben als der bei der vorliegenden Filterkerze vorgesehenen Verschweissung der Tragstäbe mit dem oberen Anschlussstück verhindert werden kann, und dass es ferner unter bestimmten Voraussetzungen wie z. B. dem Ausschluss eines Zusammenwachsens der Trubkuchen benachbarter Filterkerzen durch automatische Regelung der Filtration auch möglich ist, Biegebelastungen der Filterkerzen im Betrieb nahezu völlig auszuschalten und dann Filterkerzen ohne hohe Biegebelastbarkeit mit die oberen Drahtwindungen der Kerzenwand umgreifendem oberen Anschlussstück zu verwenden, und auch mit solchen im übrigen die Merkmale der vorliegenden Filterkerze aufweisenden Filterkerzen werden natürlich — gegebenenfalls mit Ausnahme der hohen Biegebelastbarkeit — die oben angegebenen Vorteile der vorliegenden Filterkerze erreicht, und auf diesen allgemeinen Erfindungsgedanken ist die oben angeführte erfindungsgemässe Verwendung gerichtet.

**Patentansprüche**

1. Rückspülbare Filterkerze für Anschwemm-Kerzenfilter mit hängend eingebauten Filterkerzen, bei dem ein Filterkessel durch eine horizontale Trennwand in einen oberen Filtratraum und einen unteren Unfiltratraum unterteilt ist und die Filterkerzen an der Trennwand aufgehängt und befestigt sind und in den unter der Trennwand befindlichen Unfiltratraum hineinragen, mit einem oberen Anschlussstück zur Aufhängung und Befestigung der Filterkerze an der Trennwand, das mit einem durch dasselbe hindurchlaufenden Abflusskanal zur Abführung von Filtrat aus dem Filterkerzeninnenraum in den Filtratraum versehen ist, einer im Bereich ihres oberen Endes mit dem Anschlussstück verbundenen, im wesentlichen rohrartigen und zumindest an ihrer Aussenseite im wesentlichen zylinderförmigen, selbsttragenden Kerzenwand, deren Aussenseite als Tragorgan für eine mindestens zum Teil von Filterhilfsmittel gebildete, die Filtrierung übernehmende Anschwemmschicht vorgesehen ist, und einem im Breich des unteren Endes der Kerzenwand an derselben angebrachten Verschlussstück zur Abtrennung des Filterkerzeninnenraumes vom Unfiltratraum, dadurch gekennzeichnet, dass die Kerzenwand (8) von einem Traggerüst (12) aus einer Vielzahl von in Kerzenlängsrichtung verlaufenden, im gleichen Abstand von der Kerzenachse (13) und im gleichen Winkelabstand voneinander angeordneten Tragstäben (14) und einem im wesentlichen schraubenlinienförmig auf das Traggerüst aufgebrachten und an jeder Berührungsstelle (15) mit einem Tragstab (14) mit demselben verschweissten Draht (16) gebildet ist, dessen Querschnitt an der Aussenseite (7) der Kerzenwand (8) eine mindestens annähernd in Kerzenlängsrichtung verlaufende, im wesentlichen geradlinige Begrenzung aufweist und sich nach dem Kerzeninnern (4) zu verjüngt und zwischen dessen jeweils benachbarten Windungen (17) ein sich nach dem Kerzeninnern (4) zu erweiternder Spalt (18) mit einer Spaltbreite von weniger als 250 μm an der Aussenseite (7) der Kerzenwand (8) vorgesehen ist, und dass die Kerzenwand (8) dadurch mit dem oberen Anschlussstück (1) verbunden ist, dass das obere Anschlussstück (1) mit den Tragstäben (14) des Traggerüstes (12) der Kerzenwand (8) verschweisst ist.

2. Filterkerze nach Anspruch 1, dadurch gekennzeichnet, dass das untere Ende (21) des oberen Anschlussstückes (1) mit den oberen Enden (20) der Tragstäbe (14) des Traggerüstes (12) der Kerzenwand (8) verschweisst ist.

3. Filterkerze nach Anspruch 2, dadurch gekennzeichnet, dass das unter Ende (21) des oberen Anschlussstückes (1) von einem Ringbuckel (22) gebildet ist, dessen Durchmesser dem Doppelten des Abstandes der Tragstäbe (14) von der Kerzenachse (13) entspricht.

4. Filterkerze nach Anspruch 3, dadurch gekennzeichnet, dass die den Ringbuckel (22) bildende Erhöhung im Querschnitt dreieckförmig ist und derart mit den oberen Enden (20) der Tragstäbe (14) verschweisst ist, dass der Abstand zwischen dem Fuss (23) des Ringbuckels (22) am unteren Ende (21) des oberen Anschlussstückes (1) und den oberen Enden (20) der Tragstäbe (14) kleiner als die Höhe des Ringbuckels (22) und vorzugsweise kleiner als die halbe Höhe desselben ist.

5. Filterkerze nach einem der Ansprüche 1 bis 5, dadurch gekennzeichnet, dass auch das Verschlussstück (10) mit den Tragstäben (14) des Traggerüstes (12) der Kerzenwand (8) verschweisst ist und hierzu vorzugsweise mit einem Ringbuckel (32) mit einem dem Doppelten des Abstandes der Tragstäbe (14) von der Kerzenachse (13) entsprechenden Durchmesser versehen ist.

6. Filterkerze nach einem der Ansprüche 1 bis 5, dadurch gekennzeichnet, dass der Querschnitt jedes Tragstabes (14) des Traggerüstes (12) der Kerzenwand (8) grösser als der Querschnitt des im wesentlichen schraubenlinienförmig auf das Traggerüst (12) aufgebrachten Drahtes (16) und vorzugsweise mindestens zweimal so gross, zweckmässig 2- bis 6-mal so gross, wie dieser Drahtquerschnitt ist.

7. Filterkerze nach Anspruch 6, dadurch gekennzeichnet, dass der Querschnitt jedes Tragstabes (14) des Traggerüstes (12) im wesentlichen Quadratisch ist und jeder Tragstab (14) auf seiner den Windungen (17) des Drahtes (16) zugewandten Seite mit einer in Stablängsrichtung verlaufenden, seine Verschweissung mit den einzelnen Drahtwindungen (17) erleichternden buckelförmigen Erhöhung (19) versehen ist.

8. Filterkerze nach einem der Ansprüche 1 bis 7, dadurch gekennzeichnet, dass der im wesentlichen schraubenlinienförmig auf das Traggerüst (12) aufgebrachte Draht (16) im Querschnitt im wesentlichen die Form eines spitzwinkligen gleichschenkligen Dreiecks hat, dessen Höhe vorzugsweise grösser als seine Grundlinie ist, und der Draht (16) derart auf das Traggerüst (12) aufgebracht ist, dass die Grundlinie des seinen Querschnitt bildenden Dreiecks auf der Aussenseite (7) der Kerzenwand (8) liegt und die Spaltbreite zwischen jeweils benachbarten Windungen (17) des Drahtes (16) vorzugsweise kleiner als ein Viertel der Länge der Grundlinie des Dreiecks ist.

9. Filterkerze nach Anspruch 8, dadurch gekennzeichnet, dass das den Querschnitt des Drahtes (16) bildende Dreieck eine Grundlinie von ungefähr 1 mm und eine Höhe von ungefähr 2 mm hat und die Spaltbreite zwischen jeweils benachbarten Windungen (17) des Drahtes (16) im Bereich von 80 bis 120 μm liegt.

10. Verwendung eines Spaltrohres mit einem Traggerüst (12) aus einer Vielzahl von in Rohrlängsrichtung verlaufenden, im gleichen Abstand von der Rohrachse (13) und im gleichen Winkelabstand voneinander angeordneten Tragstäben (14) und einem im wesentlichen schraubenlinienförmig auf das Traggerüst (12) aufgebrachten und an jeder Berührungsstelle (15) mit einem Tragstab (14) mit demselben verschweissten Draht (16), dessen Querschnitt an der Rohraussenseite (7) eine mindestens annähernd in Rohrlängsrichtung verlaufende, im wesentliche geradlinige Begrenzung aufweist und sich nach dem Rohrinnern (4) zu verjüngt und zwischen dessen jeweils benachbarten Windungen (17) ein sich nach dem Rohrinnern (4) zu erweiternder Spalt (18) vorgesehen ist, als selbsttragende Kerzenwand (8) für eine für Anschwemm-Kerzenfilter mit hängend eingebauten Filterkerzen vorgesehene Filterkerze.

**Claims**

1. Backflushable filter candle for settling candle filters fitted with suspended filter candles, wherein a filter vessel is divided by a horizontal partition into an upper filtrate space and a lower space without filtrate, and the filter candles are suspended on and attached to the partition and project into the space without filtrate beneath the partition, with an upper joining piece for suspending the filter candle on and attaching it to the partition, which piece has a drainage channel running through it for conducting away filtrate from the filter candle interior into the filtrate space, a self-supporting candle wall which is essentially tubular and at least on its outside essentially cylindrical and is joined in the area of its upper end to the joining piece, the outside of said candle wall being provided as a bearing member for a settling layer which is at least partly made up of auxiliary filtering material and takes over filtration, and a closing piece attached to the candle wall in the area of the lower end of the candle wall to separate the filter candle interior from the space without filtrate, characterised in that the candle wall (8) is formed from a bearing structure (12) consisting of a multiplicity of bearing rods (14) extending in the longitudinal direction of the candle equidistant from the candle axis (13) and at the same angular distance from one another, and a wire (16) applied essentially helically to the bearing structure and at each point of contact (15) with a bearing rod (14) welded thereto, the cross-section of said wire on the outside (7) of the candle wall (8) displaying an essentially rectilinear limitation extending at least approximately in the longitudinal direction of the candle and tapering towards the candle interior (4) and between the adjacent windings (17) whereof an opening (18) which enlarges towards the candle interior (4) and has a width less than 250 μm is provided on the outside (7) of the candle wall (8), and in that the candle wall (8) is joined to the upper joining piece (1), by the fact that the upper joining piece (1) is welded to the bearing rods (14) of the bearing structure (12) of the candle wall (8).

2. Filter candle according to Claim 1, characterised in that the lower end (21) of the upper joining piece (1) is welded to the upper ends (20) of the bearing rods (14) of the bearing structure (12) of the candle wall (8).

3. Filter candle according to Claim 2, characterised in that the lower end (21) of the upper joining piece (1) is formed from an annular projection (22), the diameter whereof is equivalent to twice the distance of the bearing rods (14) from the candle axis (13).

4. Filter candle according to Claim 3, characterised in that the elevation forming the annular projection (22) is triangular in cross-section, and is welded to the upper ends (20) of the bearing rods (14) in such a way that the distance between the foot (23) of the annular projection (22) on the lower end (21) of the upper joining piece (1) and the upper ends (20) of the bearing rods (14) is less than the height of the annular projection (22) and preferably less than half the height thereof.

5. Filter candle according to one of Claims 1 to 5, characterised in that the closing piece (10) is also welded to the bearing rods (14) of the bearing structure (12) of the candle wall (8), and for this purpose is preferably provided with an annular projection (32) with a diameter equivalent to twice the distance of the bearing rods (14) from the candle axis (13).

6. Filter candle according to one of Claims 1 to 5, characterised in that the cross-section of each bearing rod (14) of the bearing structure (12) of the candle wall (8) is larger than the cross-section of the wire (16) applied essentially helically to the bearing structure (12) and preferably at least twice as large, advantageously 2 to 6 times as large, as this cross-section.

7. Filter candle according to Claim 6, characterised in that the cross-section of each bearing rod (14) of the bearing structure (12) is essentially square and each bearing rod (14) is provided with a boss-shaped elevation (19) extending in the longitudinal direction of the rod on the side facing the windings (17) of the wire (16) and facilitating its welding to the individual wire windings (17).

8. Filter candle according to one of Claims 1 to 7, characterised in that the wire (16), applied essentially helically to the bearing structure (12) has essentially the form in cross-section of an acute isosceles triangle, the height whereof is preferably larger than its base line, and the wire (16) is applied to the bearing structure (12) in such a way that the base line of the triangle forming its cross-section rests on the outside (7) of the candle wall (8) and the width of the opening between adjacent windings (17) of the wire (16) is preferably less than one quarter the length of the base line of the triangle.

9. Filter candle according to Claim 8, characterised in that the triangle forming the cross-section of the wire (16) has a base line of approximately 1 mm and a height of approximately 2 mm, and the width of the opening between adjacent windings (17) of the wire (16) is in the region of 80 to 120 μm.

10. Use of a split tube with a bearing structure (12) comprising a multiplicity of bearing rods (14) extending in the longitudinal direction of the tube, equidistant from the tube axis (13) and at the same angular distance from one another, and a wire (16) applied essentially helically to the bearing structure (12) and at each point of contact (15) with a bearing rod (14) welded thereto, the cross-section of which wire displays on the outside of the tube (7) an essentially rectilinear limitation, extending at least approximately in the longitudinal direction of the tube, and tapers towards the tube interior (4) and between the adjacent windings (17) whereof an opening (18) which enlarges towards the tube interior (4) is provided as a self-supporting candle wall (8) for a filter candle provided for settling filter candles fitted with suspended filter candles.

**Revendications**

1. Bougie filtrante rétrolavable pour filtre en couches en forme de bougie à bougies filtrantes montées de façon suspendue, dans lequel une cuve de filtre est subdivisée par une cloison de séparation horizontale en un espace supérieur à filtrat et en un espace inférieur à non-filtrat et les bougies filtrantes sont suspendues et fixées à la cloison de séparation et pénètrent dans l'espace de non-filtrat se trouvant en dessous de la cloison de séparation, avec une pièce de raccordement supérieure pour la suspension et la fixation des bougies filtrantes à la cloison de séparation, laquelle pièce est pourvue d'un canal d'évacuation, s'étendant à travers la cloison, pour l'évacuation de filtrat pour l'amener de l'espace intérieur de filtre dans l'espace à filtrat, avec une paroi de bougie autoportante sensiblement tubulaire et sensiblement cylindrique au moins sur sa face extérieure et reliée au voisinage de son extrémité supérieure à la pièce de raccordement et dont la face externe est prévue comme organe porteur pour une couche d'effluence formée, au moins en partie, d'agents adjuvants de filtrage et se chargeant de la filtration, et avec une pièce de fermeture rapportée au voisinage de l'extrémité inférieure de la paroi de bougie à celle-ci pour la séparation de l'espace intérieur de la bougie filtrante de l'espace à non-filtrat, caractérisée en ce que la paroi de bougie (8) est constituée par une ossature support (12) composée d'une pluralité de tiges porteuses (14) s'étendant en direction longitudinale de la bougie et disposées à égale distance de l'axe de bougie (13) et selon un écartement angulaire égal les unes des autres et par un fil métallique (16) rapporté sensiblement hélicoïdalement sur l'ossature support et soudé en chaque emplacement de contact (15) avec une tige porteuse (14) à celle-ci et dont la section transversale, sur la face extérieure (7) de la paroi de bougie (8), présente une limitation sensiblement rectiligne s'étendant au moins approximativement en direction longitudinale de la bougie et se rétrécit vers l'intérieur (4) de la bougie et entre les spires (17) respectivement voisines duquel est prévu, sur la face extérieure (7) de la paroi de bougie (8), un interstice (18) devant s'élargir vers l'intérieur (4) de la bougie avec une largeur d'interstice de moins de 250 μm, et en ce que la paroi de bougie (8) est reliée à la pièce de raccordement supérieure (1) par le fait que la pièce de raccordement supérieure (1) est soudée aux tiges porteuses (14) de l'ossature support (12) de la paroi de bougie (8).

2. Bougie filtrante selon la revendication 1, caractérisée en ce que l'extrémité inférieure (21) de la pièce de raccordement supérieure (1) est soudée aux extrémités supérieures (20) des tiges porteuses (14) de l'ossature support (12) de la paroi de bougie (8).

3. Bougie filtrante selon la revendication 2, caractérisée en ce que l'extrémité inférieure (21) de la pièce de raccordement supérieure (1) est formée par un bossage annulaire (22) dont le diamètre correspond au double de la distance des tiges porteuses (14) à l'axe de bougie (13).

4. Bougie filtrante selon la revendication 3, caractérisée en ce que l'éminence, formant le bossage annulaire (22), est triangulaire en section transversale et soudée de telle façon aux extrémités supérieures (20) des tiges porteuses (14) que la distance, entre le pied (23) du bossage annulaire (22) à l'extrémité inférieure (21) de la pièce de raccordement supérieure (1) et les extrémités supérieures (20) des tiges porteuses (14) est plus petite que la hauteur du bossage annulaire (22) et de préférence inférieure à la demi-hauteur de celui-ci.

5. Bougie filtrante selon l'une des revendications 1 à 4, caractérisée en ce qu'également la pièce de fermeture (10) est soudée aux tiges porteuses (14) de l'ossature support (12) de la paroi de bougie (8) et est, à cet effet, pourvue de préférence d'un bossage annulaire (32) avec un diamètre correspondant au double de la distance des tiges porteuses (14) à l'axe de bougie (13).

6. Bougie filtrante selon l'une des revendications 1 à 5, caractérisée en ce que la section transversale de chaque tige porteuse (14) de l'ossature support (12) de la paroi de bougie (8) est supérieure à la section transversale du fil métallique (16) rapporté sensiblement hélicoïdalement sur l'ossature support (12) et de préférence au moins deux fois plus grande, avantageusement 2 à 6 fois plus grande que cette section transversale de fil métallique.

7. Bougie filtrante selon la revendication 6, caractérisée en ce que la section transversale de chaque tige porteuse (14) de l'ossature support (12) est sensiblement carrée et chaque tige porteuse (14) est pourvue, sur son côté tourné vers les spires (17) du fil métallique (16), d'une éminence (19) en forme de bossage annulaire s'étendant en direction longitudinale de la tige et facilitant son soudage aux diverses spires de fil métallique (17).

8. Bougie filtrante selon l'une des revendications 1 à 7, caractérisée en ce que le fil métallique (16), rapporté sensiblement hélicoïdalement sur l'ossature support (12), a, en section transversale, sensiblement la forme d'un triangle isocèle acutangle dont la hauteur est de préférence plus grande que sa base et le fil métallique (16) est rapporté de telle manière sur l'ossature support (12) que la base du triangle, formant sa section transversale, est située sur la face externe (7) de la paroi de bougie (8) et la largeur d'interstice, entre des spires (17) respectivement voisines du fil métallique (16), est de préférence plus petite que le quart de la longueur de la base du triangle.

9. Bougie filtrante selon la revendication 8, caractérisée en ce que le triangle, formant la section transversale du fil métallique (16), a une base d'environ 1 mm et une hauteur d'environ 2 mm et la largeur d'interstice, entre des spires (17) respectivement voisines du fil métallique (16), se situe dans le domaine de 80 à 120 μm.

10. Utilisation d'un tube fendu ayant une ossature support (12) composée d'une pluralité de tiges porteuses (14) s'étendant en direction longitudinale du tube et disposées à égale distance de l'axe de tube (13) et selon un écartement angulaire égal les unes des autres et d'un fil métallique (16) rapporté sensiblement hélicoïdalement sur l'ossature support (12) et soudé en chaque emplacement de contact (15) avec une tige porteuse (14) à celle-ci, dont la section transversale, sur la face externe de tube (7), présente une limitation sensiblement rectiligne s'étendant au moins approximativement en direction longitudinale du tube et se rétrécissant vers l'intérieur (4) du tube et entre des spires (17) respectivement voisines duquel est prévu un interstice (18) devant s'élargir vers l'intérieur (4) du tube, comme paroi de bougie autoportante (8) pour une bougie filtrante prévue pour des filtres en couches en forme de bougie à bougies filtrantes montées de façon suspendue.

FIG. 1

FIG. 2

FIG. 3

FIG. 4